# EUROPEAN PATENT SPECIFICATION

(11) **EP 1 413 187 B1**
(45) Date of publication and mention of the grant of the patent: **20.08.2008**
(21) Application number: 03256542.6
(22) Date of filing: 16.10.2003
(51) Int. Cl.: A01B 45/02, A01G 1/12, A01B 73/04

(54) **Grass grooming brush apparatus**
Kehrvorrichtung für Rasen
Appareil pour balayer une pelouse

(30) Priority: 17.10.2002 GB 0224178
(43) Date of publication of application: 28.04.2004
(73) Proprietor: Michel, David, Adel, Leeds LS16 7AL (GB)
(72) Inventor: Michel, David, Adel, Leeds LS16 7AL (GB)
(74) Representative: Neilson, Martin Mark

(56) References cited:
- DE-A- 3 535 683
- US-A- 5 018 587
- US-A- 5 833 013
- US-B1- 6 220 366

## Description

This invention relates to a grass grooming brush apparatus which is intended to be coupled with a propelling vehicle and which has a frame, a set of brushes mounted on the frame, and a wheel set mounted on the frame and adjustable between a ground-engaging position suitable for wheeled transport of the apparatus, and a raised position allowing the set of brushes to be engageable with the ground to brush or "groom" the surface thereof.

One example of such apparatus is disclosed in more detail in US 5833013, to which attention is drawn. DE-A-35 35 683 discloses a soil working implement with wing frames positioned either side of a central frame, the wing frames being raised and lowered by means of a hydraulic cylinder.

The present invention develops apparatus of this known type and provides in addition a pair of wing frames each mounted on an adjacent side of a central or main frame and carrying its own set of brushes. Each wing frame is capable of being folded between an operative position in which its brush set engages the ground, and a raised transport position, thereby providing a reduced overall width of the apparatus for transport purposes. In the operative position of the main frame and the wing frames, a supporting wheel set is adjusted to a raised position with respect to the frames.

The present invention has been developed primarily with a view to automate the folding and unfolding of the wing frames, simultaneously with adjustment of the supporting wheel set.

According to the invention that is provided a grass grooming brush arrangement which can be coupled with a propelling vehicle and which comprises:
a central main frame carrying a set of brushes;
a supporting wheel set arranged to support the main frame;
second adjustment means mounting the wheel set on the main frame for movement between a ground engaging transport position of the apparatus, and a raised position allowing the brush sets to carry out brushing operations on the ground;
characterised by:
   a pair of wing frames each mounted on an adjacent side of the main frame and carrying its own set of brushes;
   first adjustment means connecting each wing frame to the main frame for folding movement between an operative position and a raised transport position of reduced overall width of the apparatus, said first adjustment means comprising a cable and pulley arrangement;
   electrically controlled drive means coupled with the first and second adjustment means and operative to adjust the wheel set at the same time as the wing frames are adjusted;

Preferably, a single drive means provides simultaneous adjustment of the wheel set and of the wing frame.

In a preferred arrangement, a mechanism may be provided that utilises an electrically operated ram and which, by acting through a series of cables and pulleys enables the wing frames to be folded to the transport position, at the same time as the wheel set is lowered to a ground-engaging position in which the brush set of the main frame is lifted out of contact with the ground. Thus, the assembly becomes ready for moving from one area on site to another, without the driver of the propelling vehicle having to leave his seat.

Therefore, a grass grooming brush apparatus according to a preferred embodiment of the invention can carry out maintenance of golf "greens" in which it is desirable to brush the surface of the greens for such reasons as the brushing-in of a sand top dressing, or the dispersion of dew, or to stand the grass up before mowing to facilitate an even cut.

As it is highly desirable to avoid disruption of play, it is desirable to produce as wide a brushing action as possible, within the limits of practical manoeuvrability,

The invention, therefore, is an improvement on existing grooming apparatus, adding a pair of folding, preferably pivoted wing "brushes" which can move separately of the main central brush section, thus enabling them to conform to the contour of the surface, and to fold upwards and inwards to a transport position and thereby reduce the overall width of the apparatus.

By means of the invention, extension or retraction action of an actuator (which is a preferred form of drive means to move the transport wheels between lowered and raised positions) is converted into a lateral lifting or lowering force to move the wing brush frames between the operative position and the transport position at the same time as the transport wheels are adjusted.

While it is preferred that a single drive means provides the power to adjust all of the components, it is within the scope of the invention to provide two or more separate actuators.

A preferred embodiment of the invention will now be described in detail, by way of example only, with reference to the accompanying drawing, in which:
Figure 1 is a perspective illustration from above of a grass grooming apparatus according to the invention and showing in schematic form a drive means for adjusting the apparatus between an operative grass grooming position and a transport position of reduced width; and
Figure 2 is a schematic illustration of a detailed part of a transmission of an actuating force to adjust the apparatus between the operative position and the transport position.

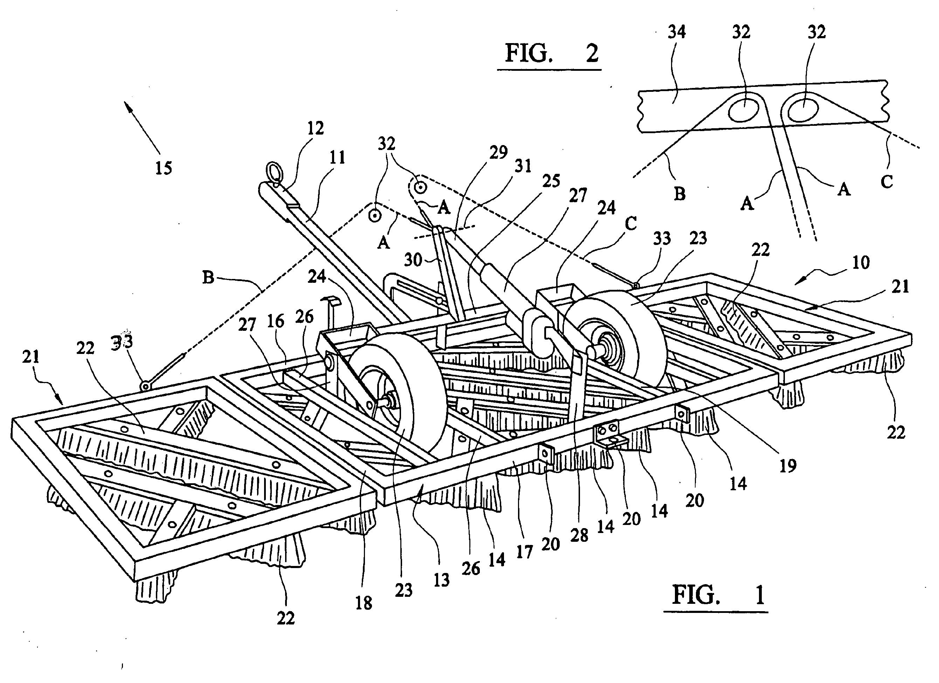

Referring now to Figure 1 of the drawings, a grass grooming brush arrangement according to the invention is designated generally by reference 10, and is intended to be coupled with a propelling vehicle and preferably by being towed behind a propelling vehicle (not shown) via a towbar 11, having a coupling hitch 12.

The apparatus has a central rectangular main frame 13 carrying a set of brushes, which in the illustrated embodiment comprises a number of separate brush sections 14, extending generally parallel to each other, and transversely of the direction of forward travel shown by arrow 15. The frame 13 is rectangular, comprising front and rear transverse beams 16 and 17 respectively, and laterally spaced side frame beams 18 and 19, extending parallel to the travelling direction 15. The drawbar 11 is coupled to the forward transverse beam 16 rigidly to allow the entire apparatus 10 to be towed behind the propelling vehicle. To allow the apparatus 10 to be towed in a reverse direction, mounting brackets 20 are provided on the rear transverse beam 17, and to which the drawbar 11 is secured after being demounted from its connection to the forward transverse support beam 16.

Two wing frames 21 are provided, each mounted on an adjacent side of the main frame 13, and carrying its own set of brushes 22. Each wing frame 21 also is rectangular and the wing frames are shown in Figure 1 in the laterally outwardly deployed position, in which the sets of brushes 22 engage the ground surface, e.g. a grass surface on a fairway or green on a golf course, in order to carry out a required "grooming" action. In the laterally outwardly deployed position, the wing frames 21 are capable of pivoting up and down about respective pivot mountings (not shown in detail) provided on the facing sides of the main frame 13 in order to allow variations in the contour of the ground surface, compared with the ground surface over which the main frame section 13 is travelling.

Each wing frame 21 is connected to the main frame 13 via a first adjustment means (described in more detail below) which allows the wing frame 21 to carry out folding movement from the operative position shown in Figure 1, to a raised transport position of reduced overall width of the apparatus (not shown).

A supporting wheel set is provided to support the main frame 13. The wheel set comprises a tandem arrangement of transport wheels 23 each mounted rotatably on a U-shaped mounting bracket 24 and the mounting brackets 24 being joined together by a connecting bar 25 which allows the mounting brackets 24 to be moved together during adjustment of the transport wheels 23 between a raised position shown in Figure 1, and a lowered transport position (not shown). Each mounting bracket 24 is pivotally mounted on a respective sub-frame of the main frame 13, each sub-frame comprising longitudinal struts 26 which are spaced apart laterally from each other to define a recess which allows movement of the respective transport wheel 23 between the raised position shown in Figure 1 and the lowered transport position. The sub-frame also includes mounting straps 27 connected to the beams 26, and on which the mounting brackets 24 are pivotally mounted.

In order to adjust the wheel set between the raised position shown in Figure 1 (the operative position of the apparatus) to the transport position, a drive means is provided, taking the form, in the illustrated embodiment, of a single actuator 27 which is mounted on a post 28 secured to the rear transverse beam 17, and of which the rod 29 of the actuator is pivotally connected to the upper end of an actuator arm 30. A pivot connection 31 is provided between the end of actuator rod 29 and the upper end of the actuator arm 30, whereas the lower end of the arm 30 is rigidly secured to the connecting bar 25 which is coupled to the mounting brackets 24. Evidently extension or retraction movement of the actuator rod 29 will cause the brackets 24 to pivot and thereby raise or lower the transport wheels 23, i.e. extension of the rod 29 will raise the wheels 23 and retraction of the rod 29 will lower the transport wheels.

When the transport wheels 23 are in a raised position, this may be a completely raised position out of contact with the ground, in which case the entire weight of the apparatus bears on the ground via the brushes 14 and 22, to provide a vigorous brushing or "grooming" action. If it is desired to reduce the pressure contact between the brush elements and the ground, then the wheels 23 may be raised only a small distance from the transport position.

When it is desired to move the apparatus 10 from one site to another, it will often be the case that only narrow pathways are available, and therefore, when the wheels 23 are lowered to the transport position, it will be necessary to reduce the overall width of the apparatus, and which is achieved by upward folding movement of the wing frames 21. The manner by which this adjustment of the wing frames takes place simultaneously with adjustment of the wheels 23 will now be described.

There is therefore provided a coupling of the actuator 27 with the wing frame sections 21, whereby retraction of the rod 29 effects a pulling force on the wing frame sections 21 which then pivot upwardly from the operative position shown in Figure 1 to an upwardly extending transport position (not shown). In the illustrated embodiment, the coupling to the wing frames 21 is achieved by means of flexible tensile connections, which take the form of cables, coupled at one end to the upper end of actuator arm 30 and at their opposite ends comprise connections to the frame sections of wing frames 21. This is shown in Figure 1, in which the initial section of each tensile link is shown by reference A, and which is then taken round part of a pulley 32, and then runs to a connection point 33 on the frame of each wing frame 21. The length of flexible tensile link running between each pulley 32 and a respective one of the wing frames 21 is shown by references B and C in figure 1.

Evidently, extension or retraction of the actuator rod 29 will therefore cause simultaneous adjustment of the transport wheels 23 and the wing frames 21.

Accordingly, the preferred embodiment is a disclosure of one example in which a common drive means is provided which is coupled with first and second adjustment means (associated with the wing frames 21 and the wheel set 23 respectively), such drive means being operative to adjust the wheel set at the same time as the wing frames are adjusted.

The flexible tensile links between the actuator arm 30 and the connection points 33 on the wing frames 21 are shown schematically only in Figure 1. In practice, the pulleys 32 will be mounted on a fixed part of the general frame of the apparatus, such frame being coupled rigidly to, or forming part of the main frame 13.

Figure 2 is a schematic plan view illustration showing the pulleys 32 mounted on a frame component 34 of part of the main or fixed frame of the apparatus.

The actuator 27 is provided, in order to apply required turning movement to the actuator arm 30 and also to apply a pulling force, or release pulling force on the tensile links to the frame sections 21 (which then allows the wing frames to lower themselves to the operative position under the action of gravity).

## Claims

1. A grass grooming brush arrangement (10) which can be coupled with a propelling vehicle and which comprises:
a central main frame (13) carrying a set of brushes (14);
a supporting wheel set (23) arranged to support the main frame (13);
second adjustment means (24, 25, 30) mounting the wheel set (23) on the main frame (13) for movement between a ground engaging transport position of the apparatus, and a raised position allowing the brush sets (14, 22) to carry out brushing operations on the ground;
**characterised by**:
a pair of wing frames (21) each mounted on an adjacent side (18,19) of the main frame (13) and carrying its own set of brushes (22);
first adjustment means (A, B, C, 32) connecting each wing frame (21) to the main frame (13) for folding movement between an operative position and a raised transport position of reduced overall width of the apparatus, said first adjustment means comprising a cable and pulley arrangement;
electrically controlled drive means (27) coupled with the first and second adjustment means and operative to adjust the wheel set (23) at the same time as the wing frames (21) are adjusted.

2. Apparatus according to Claim 1, in which the drive means comprises a single actuator (27).

3. Apparatus according to Claim 2, in which the actuator (27) is coupled with the wheel set (23) via a pivoting cradle (24, 25) mounted pivotally on the main frame (13), and coupled with the wing frames (21) via first adjustment means, (A, B, C, 32).

4. Apparatus according to Claim 3, in which the arrangement of pulleys (32) are mounted on the main frame (13) and cables (A, B, C) are coupled at one end of a single actuator rod (29) of the actuator (27), and coupled at their opposite end (33), to connections with the wing frames (21).

5. Apparatus according to any one of the proceeding claims, in which the main frame (13) has transversely extending and longitudinally spaced support beams (16) and (17), each provided with mounting brackets (20), to enable a draw bar (11) to be coupled with one or the other of the beams (16 or 17), depending upon the required pulling direction of the apparatus.

## Patentansprüche

1. Graspflegebürstenanordnung (10), welche mit einem Antriebsfahrzeug gekoppelt werden kann und welche umfasst:
einen mittleren Hauptrahmen (13), welcher eine Gruppe von Bürsten (14) trägt,
eine Stützradgruppe (23), welche angeordnet ist, den Hauptrahmen (13) zu stützen;
ein zweites Einstellmittel (24, 25, 30), welches die Radgruppe (23) an dem Hauptrahmen (13) für eine Bewegung zwischen einer mit dem Boden in Eingriff befindlichen Transportposition der Vorrichtung und einer angehobenen Position, welche der Bürstengruppe (14, 22) ermöglicht, einen Bürstvorgang auf dem Boden auszuführen, befestigt;
**gekennzeichnet durch**:
ein Paar von Flügelrahmen (21), welche jeweils an einer benachbarten Seite (18, 19) des Hauptrahmens (13) angebracht sind und ihre eigene Gruppe von Bürsten (22) tragen;
ein erstes Einstellmittel (A, B, C, 32), welches jeden Flügelrahmen (21) mit dem Hauptrahmen (13) für eine Faltbewegung zwischen einer Betriebsposition und einer angehobenen Transportposition mit verringerter gesamter Breite der Vorrichtung verbindet, wobei das erste Einstellmittel eine Seil- und Rollenanordnung umfasst;
ein elektrisch gesteuertes Antriebsmittel (27), welches mit dem ersten und zweiten Einstellmittel gekoppelt ist und dazu dient, die Radgruppe (23) zu der gleichen Zeit einzustellen, zu der die Flügelrahmen (21) eingestellt werden.

2. Vorrichtung nach Anspruch 1, bei welcher das Antriebsmittel einen einzelnen Aktuator (27) umfasst.

3. Vorrichtung nach Anspruch 2, bei welcher der Aktuator (27) mit der Radgruppe (23) über ein Schwenkgestell (24, 25), welches schwenkbar an dem Hauptrahmen (13) angebracht ist, gekoppelt ist, und welcher mit den Flügelrahmen (21) über das erste Einstellmittel (A, B, C, 32) gekoppelt ist.

4. Vorrichtung nach Anspruch 3, bei welcher die Anordnung von Rollen (32) an dem Hauptrahmen (13) befestigt ist und Seile (A, B, C) mit einem Ende eines einzelnen Aktuatorstabs (29) des Aktuators (27) gekoppelt sind und an ihren gegenüberliegenden Enden (33) mit Verbindungen mit den Flügelrahmen (21) gekoppelt sind.

5. Vorrichtung nach einem der vorhergehenden Ansprüche, in welcher der Hauptrahmen (13) sich quer verlaufend erstreckende und in Längsrichtung beabstandete Stützträger (16) und (17) aufweist, wobei jeder mit Befestigungshalterungen (20) versehen ist, um zu ermöglichen, dass ein Zugstab (11) mit dem einen oder dem anderen Träger (16 oder 17) in Abhängigkeit der geforderten Zugrichtung der Vorrichtung gekoppelt wird.

## Revendications

1. Appareil de balayage à brosses de pelouse (10) pouvant être couplé à un véhicule propulseur et comprenant :
- un châssis principal central (13) portant un ensemble de brosses (14) ;
- un ensemble de roue de support (23) disposé pour supporter le châssis principal (13) ;
- des seconds moyens de réglage (24, 25, 30) montant l'ensemble de roue (23) sur le châssis principal (13) pour un déplacement entre une position de transport en contact avec le sol de l'appareil, et une position soulevée permettant aux ensembles de brosse (14, 22) d'effectuer des opérations de balayage sur le sol ;
**caractérisé par** :
- une paire de cadres d'aile (21) montés chacun sur un côté adjacent (18, 19) du châssis principal (13) et portant son propre ensemble de brosses (22) ;
- des premiers moyens de réglage (A, B, C, 32) connectant chaque cadre d'aile (21) au châssis principal (13) pour un mouvement d'escamotage entre une position opérationnelle et une position soulevée de transport de largeur hors tout réduite de l'appareil, lesdits premiers moyens de réglage comprenant un agencement de câble et poulie ;
- des moyens d'entraînement à commande électrique (27) couplés aux premier et second moyens de réglage et prévu pour régler l'ensemble de roue (23) en même temps que le réglage des cadres d'aile (21).

2. Appareil selon la revendication 1, dans lequel les moyens d'entraînement comprennent un actionneur unique (27).

3. Appareil selon la revendication 2, dans lequel l'actionneur (27) est couplé à l'ensemble de roue (23) par l'intermédiaire d'un berceau pivotant (24, 25) monté, de façon pivotante, sur le châssis principal (13), et couplé avec les cadres d'aile (21) par l'intermédiaire des premiers moyens de réglage (A, B, C, 32).

4. Appareil selon la revendication 3, dans lequel l'agencement de poulies (32) est monté sur le châssis principal (13) et des câbles (A, B, C) sont couplés à une extrémité d'une tige d'actionneur unique (29) de l'actionneur (27), et sont couplés au niveau de leurs extrémités opposées (33) à des connexions avec les cadres d'aile (21).

5. Appareil selon l'une quelconque des revendications précédentes, dans lequel le châssis principal (13) possède des traverses de support s'étendant transversalement et espacées de façon longitudinale (16) et (17), munies chacune de goussets de montage (20), pour permettre à une barre de remorquage (11) d'être couplée avec l'une ou l'autre des traverses (16 ou 17), selon la direction de traction requise de l'appareil .
